# EUROPEAN PATENT SPECIFICATION

(11) **EP 3 715 147 B1**
(45) Date of publication and mention of the grant of the patent: **16.02.2022**
(21) Application number: 20166476.0
(22) Date of filing: 27.03.2020
(51) Int. Cl.: B60C 11/04, B60C 11/12, B60C 11/03

(54) **LOW NOISE TIRE TREAD**
GERÄUSCHARME REIFENLAUFFLÄCHE
BANDE DE ROULEMENT DE PNEU À FAIBLE BRUIT

(30) Priority: 29.03.2019 US 201916368949
(43) Date of publication of application: 30.09.2020
(73) Proprietor: The Goodyear Tire & Rubber Company, Akron, OH 44316 (US)
(72) Inventor: REICHLING, Gilles, L-9189 Vichten (LU); DE WIT, Erik, L-9283 Diekirch (LU); DUBREUIL, Melodie, L-9264 Diekirch (LU); VAISSAUD, Julien Alexandre, B-6700 Arlon (BE); FOSAM, Richard Mbewo Samwayera, L-7462 Moesdorf (LU); MOIA, Robin, L-3352 Leudelange (LU); JACQUES, Olivier Guy, L-9170 Mertzig (LU); PLETSCHETTE, Pascal, L-7346 Mullendorf (LU); MAUS, Doris, D-54332 Wasserliesch (DE)
(74) Representative: Kutsch, Bernd

(56) References cited:
- EP-A1- 2 818 334
- EP-A1- 3 153 334
- EP-A2- 3 000 621
- US-A1- 2010 186 860

## Description

### Field of the Invention

This invention relates generally to a tire and, more particularly, to a tread for a tire having a low noise tread configuration.

### Background of the Invention

It is known that in pneumatic tires the radially outer surface, axially extending from one tire sidewall to the other, may be provided with a plurality of grooves in the thickness of the tread band and arranged in various ways in order to divide the band into ridges and/or blocks, mutually spaced from one another by such grooves. The ridges and blocks may be provided with "lamels", namely thin slits directed from the outer surface towards the inside of the tire. These slits may be of variable depth and reach the sides of the ridges and/or blocks.

The structure formed by the grooves and the slits may constitute a "tread pattern", which is a typical and characterizing component of the tire, variable in accordance with a determined use for the tire. By way of example, specialized tires of a "winter" type may have a tread pattern with a large number of blocks and deep grooves in order to increase road holding on snowy and/or muddy ground peculiar to the winter season. Tread patterns of tires to be used on well maintained roads in normal weather under normal service conditions may be characterized by large circumferential ridges having a zig-zag path, from which transverse grooves may depart. The grooves of the normal pattern may be thinner than the winter pattern. Such normal or "summer patterns" may penetrate a liquid layer between the tire and a wet road surface (for instance when it rains) thereby ensuring good maneuverability, satisfactory driving stability, and good grip on a wet road surface. Such summer patterns may further possess uniform wear, silent running, and comfort characteristics.

Uniform wear of a tread pattern may result from a large ratio between solid and hollow areas, called "filling coefficient" or "net to gross ratio". Thus, a compact tread, having few movable blocks below the impression area and few thin grooves, may negatively affect the tire behavior in respect of the wet grip or aquaplaning phenomenon. To avoid aquaplaning, a "wet pattern" may have widely spaced blocks provided with several slits, or many large grooves and a low filling coefficient. These features, which increase the mobility of the blocks below the impression area, may negatively affect the achievement of a uniform and slowly wearing tire. Further, wet patterns of this kind may be audibly noisy, even on smooth roads in good conditions, because these patterns generate a series of acoustic phenomena, that is, main waves and their harmonics, of a particular frequency which often resonate with each other, and are very difficult to eliminate or attenuate.

What may generally be desired for good performance from a tire, whether operating in straightaway driving, cornering, accelerating or braking condition, may be a strong directional stability or handling, low rolling resistance, excellent riding comfort, relatively low audible noise emission, relatively high mileage tread life or wear, and relatively good traction. Also, the mass of the tire may be as low as possible for the loading range specified without decreasing the endurance or durability of the tire.

EP 3 000 621 A2 describes a tire tread in accordance with the preamble of claim 1. Other treads having inclined, relatively shallow sipes are known from EP 3 153 334 A1, EP 2 828 334 A1 and US 2010/186860 A1.

### Definitions

"Axial" and "axially" refer to lines or directions that are parallel to the axis of rotation of the tire.

"Circumferential" and "circumferentially" mean lines or directions extending along the perimeter of the surface of the annular tire parallel to the equatorial plane (EP) and perpendicular to the axial direction.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Radial" and "radially" mean directions radially toward or away from the axis of rotation of the tire.

"Sipe" or "incision" means small slots molded into the tread elements of the tire that subdivide the tread surface and improve traction; sipes may be designed to close when within the contact patch or footprint, as distinguished from grooves.

### Summary of the Invention

The invention relates to tire tread in accordance with claim 1 and to a tire in accordance with claim 15.

Dependent claims refer to preferred embodiments of the invention.

A tread in accordance with the present invention has a midcircumferential plane, a first axial tread edge, and a second axial tread edge. The tread includes a first shoulder rib extending circumferentially about a perimeter of the tread, a second shoulder rib extending circumferentially about the perimeter of the tread, and a first intermediate rib extending circumferentially about the perimeter of the tread. The first intermediate rib is defined by a first and a second circumferentially extending groove disposed to each axial side of the first intermediate rib. The first intermediate rib has a first plurality of angled sipes extending both axially and circumferentially at an angle between 50º and 70º relative to the first circumferentially extending groove. The angled sipes each have a radial depth of between 1.0 mm and 3.0 mm.

In a preferred aspect of the invention, the second intermediate rib is axially disposed between the first intermediate rib and the third intermediate rib.

In a preferred aspect of the invention, the angled sipes of the first intermediate rib may extend to a blind end at an axial location about midway across the first intermediate rib.

In a preferred aspect of the invention, the angled sipes of the second intermediate rib may extend to a blind end at an axial location about midway across the second intermediate rib.

In a preferred aspect of the invention, the angled sipes of the third intermediate rib may extend to a blind end at an axial location about midway across the third intermediate rib.

### Brief Description of the Drawings

The features of the present invention will become apparent to those skilled in the art to which the present invention relates from reading the following specifications with reference to the accompanying drawings, in which:
FIG. 1 is a schematic perspective view of a tread of a tire in accordance with the present invention;
FIG. 2 is a schematic front elevation view of the tire of FIG. 1; and
FIG. 3 is a schematic sectional view taken along line '3-3' in FIG. 2.

### Detailed Description of Example Embodiments of the Present Invention

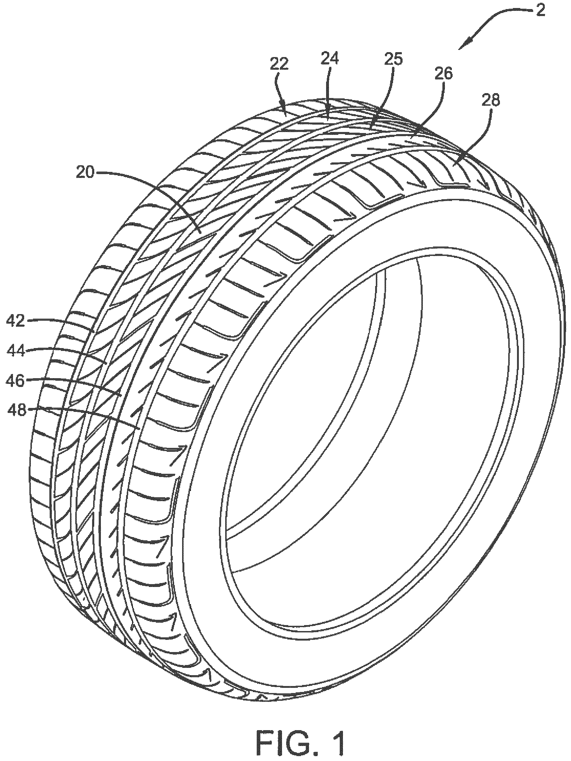

An example tire 2 in accordance with the present invention is illustrated in FIGS. 1-3. The tire 2 may be pneumatic or non-pneumatic tires. Preferably, it is a pneumatic tire. The tire 2 may be mounted on a vehicle wheel and connected to an axle of a vehicle, such as a passenger car or light truck. The tire 2 is be rotatable about a longitudinal rotation axis of the axle. A mid-circumferential plane M extends perpendicular to the rotation axis and bisect the tire 2. The tire 2 includes a tread 20 and a preferably radial carcass extending between a pair of inextensible beads, as shown in US-A-5,421,387 for instance. Axially opposite ends of the carcass may be secured to a respective bead. The carcass is flanked by two sidewalls. A belt package may be located between the carcass and the tread 20.

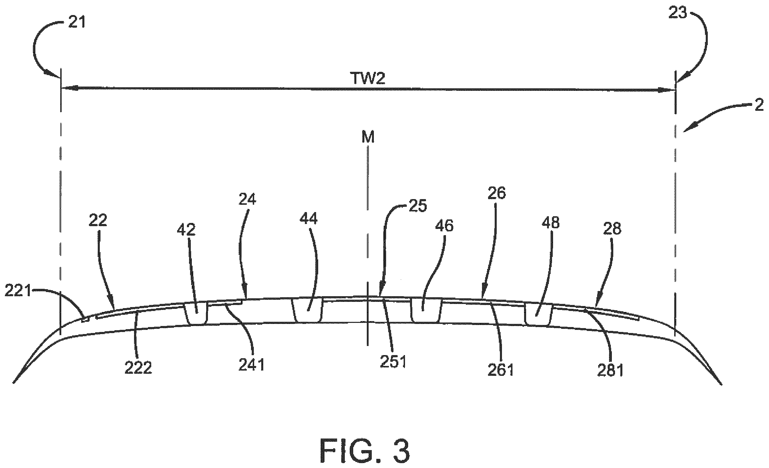

The tread 20 has a tread width TW2 defined as above or a shown in Fig. 3, or an axial distance widthwise across the tire 2 measured within the footprint of the tire when the tire 2 is contacting a road surface and when the tire 2 is inflated to a design pressure and loaded to a rated load.

The tread width TW2 is axially equidistant about the mid-circumferential plane M of the tire 2 (FIG. 3).

Preferably, the tread 20 has five longitudinally extending ribs: a first rib 22, a second rib 24, a third rib 25, a fourth rib 26, and a fifth rib 28, spaced axially apart widthwise over the tread width TW2. The longitudinally extending ribs 22, 24, 25, 26, 28 are separated by preferably uninterrupted circumferential grooves 42, 44, 46, 48. Each circumferential groove 42, 44, 46, 48 has a respective width measured perpendicular to the mid-circumferential plane M. Each circumferential rib 22, 24, 25, 26, 28 has a respective rib width measured perpendicular to the mid-circumferential plane M. The center rib 25 is preferably bisected by the mid-circumferential plane M.

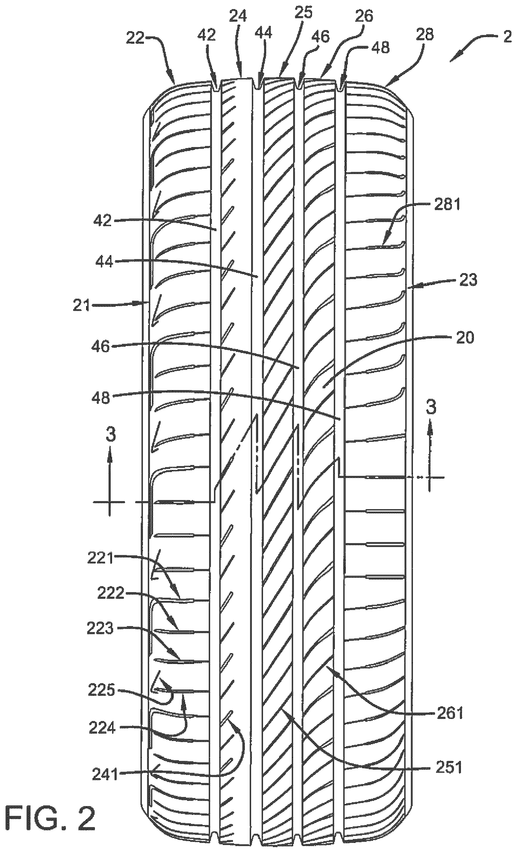

The first shoulder rib 22 has first shoulder sipes 221, second shoulder sipes 222, third shoulder sipes 223, fourth shoulder sipes 224 and fifth shoulder sipes 225. The first sipes 221 extend axially outward from the axially outermost groove 42 toward a first tread edge 21. The first sipes 221 simultaneously also curve in a circumferential direction adjacent the axially outer ends of the second and third sipes 222, 223 of the first shoulder rib 2 and parallel the first tread edge 21. The second sipes 222 preferably extend axially outward from the axially outermost groove 42 toward the first sipes 221 and the first tread edge 21. The third sipes 223 preferably extend axially outward from the axially outermost groove 42 toward the first sipes 221 and the first tread edge 21. The fourth sipes 224 preferably extend axially outward from the axially outermost groove 42 toward the first tread edge 21. Adjacent the axially outer edges of the fourth sipes 224 may be "check mark" shaped fifth sipes 225 (FIG. 2).

The second intermediate rib 24 preferably has angled sipes 241 extending axially inward from the axially outermost groove 42 to a blind end at an axial location about midway across the second rib 24. The angled sipes 241 may extend axially and circumferentially at an angle between 50° and 70°, or 60° relative to the axially outermost groove 42. The angled sipes 241 preferably have a uniform radial depth between 1.0 mm and 3.0 mm, or 1.5 mm and 2.5 mm, or 2.0 mm.

The third center rib 25 is defined axially between the intermediate groove 44 and the intermediate groove 46. The third rib 25 preferably has angled sipes 251 extending axially from the intermediate groove 44 to the intermediate groove 46. The angled sipes 251 preferably extend axially and circumferentially at an angle between 50° and 70°, or 60° relative to the intermediate grooves 44, 46. The angled sipes 251 preferably have a uniform radial depth between 1.0 mm and 3.0 mm, or 1.5 mm and 2.5 mm, or 2.0 mm.

The fourth intermediate rib 26 preferably have angled sipes 261 extending axially inward from the axially outermost groove 48 to the intermediate groove 46 across the fourth rib 26. The angled sipes 261 preferably extend axially and circumferentially at an angle between 50° and 70°, or 60° relative to the axially outermost groove 48. The angled sipes 241 preferably have a uniform radial depth between 1.0 mm and 3.0 mm, or 1.5 mm and 2.5 mm, or 2.0 mm.

The fifth shoulder rib 28 preferably has axial sipes 281 that extend axially outward from the axially outermost groove 48 toward a second tread edge 23.

Each of the angled sipes 241, 251, 261 preferably extends at the same angle relative to all of the circumferential grooves 42, 44, 46, 48 (FIG. 2).

The shoulder sipes 221, 222, 223, 224, 281 may increase in width as they extend axially outward (FIG. 2).

The tire 2 as described above exhibits a pass-by-noise level below 65.0 dB(A). At the same time, it provides a good rolling resistance, impact robustness, ride and handling.

## Claims

1. A tread for a tire (2), the tread (20) having a midcircumferential plane (M), a first axial tread edge (21) and a second axial tread edge (23), the tread (20) further comprising:
a first shoulder rib (22) extending circumferentially about a perimeter of the tread (20);
a second shoulder rib (28) extending circumferentially about the perimeter of the tread (20); and
a first intermediate rib (24) extending circumferentially about the perimeter of the tread (20), the first intermediate rib (24) being defined by a first and a second circumferentially extending groove (42, 44) disposed to each axial side of the first intermediate rib (24), the first intermediate rib (24) having a plurality of first angled sipes (241) extending both axially and circumferentially at an angle in a range of from 50° to 70° degree relative to the first circumferentially extending groove (42), the first angled sipes (241) each having a radial depth in a range of from 1.0 mm to 3.0 mm;
**characterized in that** the first shoulder rib (22) has first shoulder sipes (221), second shoulder sipes (222), third shoulder sipes (223), fourth shoulder sipes (224) and fifth shoulder sipes (225), the first shoulder sipes (221) extending axially outward from the axially outermost groove (42) toward the first tread edge (21) and the first shoulder sipes (221) simultaneously also curve in a circumferential direction adjacent the axially outer ends of the second and third shoulder sipes (222, 223) and parallel the first tread edge (21).

2. The tread as set forth in claim 1 wherein the first angled sipes (241) have a uniform radial depth in a range of from 1.5 mm to 2.5 mm, preferably 2.0 mm, and/or extend in a range of from 55° to 65° degree, preferably 60° degree, relative to the first circumferentially extending groove (42).

3. The tread a set forth in claim 1 or 2 wherein the first angled sipes (241) extend from the first circumferentially extending groove (42) into the first intermediate rib (24) and end in the first intermediate rib (24) at a position located axially in a range of from 25 to 75 percent, preferably 25 to 50 percent, of the axial width of the first intermediate rib (24).

4. The tread as set forth in at least one of the previous claims further including a second intermediate rib (25) extending circumferentially about the perimeter of the tread (20), the second intermediate rib (25) being defined by the second circumferentially extending groove (44) and a third circumferentially extending groove (46) disposed to each axial side of the second intermediate rib (25), the second intermediate rib (25) having a plurality of second angled sipes (251) extending both axially and circumferentially at an angle in a range of from 50° to 70° degree relative to the second circumferentially extending groove (44), the second angled sipes (251) each having a radial depth in a range of from 1.0 mm to 3.0 mm.

5. The tread as set forth in claim 4 wherein the second angled sipes (251) have a uniform radial depth in a range of from 1.5 mm to 2.5 mm, preferably 2.0 mm, and/or extend in a range of from 55° to 65° degree, preferably 60° degree, relative to the second circumferentially extending groove (44).

6. The tread a set forth in claim 4 or 5 wherein the second angled sipes (251) extend from the second circumferentially extending groove (44) into the second intermediate rib (24) and fully across the second intermediate rib (24) and join the third circumferentially extending groove (46).

7. The tread as set forth in at least one of the previous claims 4 to 6 further including a third intermediate rib (26) extending circumferentially about the perimeter of the tread (20), the third intermediate rib (26) being defined by the third circumferentially extending groove (46) and a fourth circumferentially extending groove (48) disposed to each axial side of the third intermediate rib (26), the third intermediate rib (26) having a plurality of third angled sipes (261) extending both axially and circumferentially at an angle in a range of from 50° to 70° degree relative to the third circumferentially extending groove (46), the third angled sipes (261) each having a radial depth in a range of from 1.0 mm to 3.0 mm.

8. The tread as set forth in claim 7 wherein the third angled sipes (261) have a uniform radial depth in a range of from 1.5 mm to 2.5 mm, preferably 2.0 mm, and/or extend in a range of from 55° to 65° degree, preferably 60° degree, relative to the third circumferentially extending groove (46).

9. The tread a set forth in claim 7 or 8 wherein the third angled sipes (261) extend from the third circumferentially extending groove (46) into the third intermediate rib (26) and fully across the third intermediate rib (26) and join the fourth circumferentially extending groove (48).

10. The tread as set forth in at least one of the claims 7 to 9 wherein the circumferential width of the third angled sipes (261) varies, preferably increases, when moving along the third angled sipes (261) from the third circumferentially extending groove (46) to the fourth circumferentially extending groove (48).

11. The tread as set forth in at least one of the previous claims 4 to 10 wherein the second intermediate rib (25) is a center rib and wherein the axial width of the first and/or the third intermediate rib (24, 26) is in a range of from 90 to 110 percent of the axial width of the second intermediate rib (25).

12. The tread as set forth in at least one of the previous claims wherein:
(i) the first shoulder rib (22) comprises a circumferentially repeating pattern of sipes, the pattern comprising a first shoulder sipe (221), a second shoulder sipe (222), a third shoulder sipe (223), a fourth shoulder sipe (224) and a fifth shoulder sipe (225), wherein the first shoulder sipe (221) extends axially outward from the first circumferentially extending groove (42) toward the first axial tread edge (21) and optionally simultaneously also curves in a circumferential direction adjacent the axially outer ends of the second and third shoulder sipes (222, 223) and parallel the first tread edge (21), wherein the second, third and fourth shoulder sipes (222, 223, 224) extend axially outward from the first circumferentially extending groove (42) toward the first tread edge (21), and wherein the fifth shoulder sipe (225) preferably has the shape of a check mark; and/or
(ii) the second shoulder rib (28) comprises a plurality of axially extending shoulder sipes (281) extending axially outward from the fourth circumferentially extending groove (48) toward the second axial tread edge (23).

13. The tread as set forth in claim 12 wherein the axially extending shoulder sipes (281) in the second shoulder rib (28) and/or at least one or all of the first shoulder sipe (221), the second shoulder sipe (222), the third shoulder sipe (223) and the fourth shoulder sipe (224) in the first shoulder rib (22) increase in circumferential width, either continuously or in one or more steps, as they extend axially outward.

14. The tread of claim 1 wherein the fifth shoulder sipes (225) are "check mark" shaped sipes and are located adjacent the axially outer edges of the fourth shoulder sipes (224).

15. A tire having a tread (20) in accordance with at least one of the previous claims.

## Patentansprüche

1. Lauffläche für einen Reifen (2), wobei die Lauffläche (20) eine Mittelumfangsebene (M), eine erste axiale Laufflächenkante (21) und eine zweite axiale Laufflächenkante (23) aufweist, wobei die Lauffläche (20) ferner Folgendes umfasst:
eine erste Schulterrippe (22), die sich in Umfangsrichtung um einen Perimeter der Lauffläche (20) herum erstreckt;
eine zweite Schulterrippe (28), die sich in Umfangsrichtung um den Perimeter der Lauffläche (20) herum erstreckt; und
eine erste Zwischenrippe (24), die sich in Umfangsrichtung um den Perimeter der Lauffläche (20) herum erstreckt, wobei die erste Zwischenrippe (24) durch eine erste und eine zweite sich in Umfangsrichtung erstreckende Rille (42, 44) definiert ist, die an jeder axialen Seite der ersten Zwischenrippe (24) angeordnet sind, wobei die erste Zwischenrippe (24) mehrere erste abgewinkelte Lamellen (241) aufweist, die sich sowohl axial als auch in Umfangsrichtung in einem Winkel in einem Bereich von 50° bis 70° Grad relativ zu der ersten sich in Umfangsrichtung erstreckenden Rille (42) erstrecken, wobei die ersten abgewinkelten Lamellen (241) jeweils eine radiale Tiefe in einem Bereich von 1,0 mm bis 3,0 mm aufweisen;
**dadurch gekennzeichnet, dass** die erste Schulterrippe (22) erste Schulterlamellen (221), zweite Schulterlamellen (222), dritte Schulterlamellen (223), vierte Schulterlamellen (224) und fünfte Schulterlamellen (225) aufweist, wobei sich die ersten Schulterlamellen (221) von der axial äußersten Rille (42) in Richtung der ersten Laufflächenkante (21) axial nach außen erstrecken, und sich die ersten Schulterlamellen (221) gleichzeitig ebenso in einer Umfangsrichtung angrenzend an die axial äußeren Enden der zweiten und der dritten Schulterlamellen (222, 223) und parallel zu der ersten Laufflächenkante (21) krümmen.

2. Lauffläche nach Anspruch 1, wobei die ersten abgewinkelten Lamellen (241) eine gleichmäßige radiale Tiefe in einem Bereich von 1,5 mm bis 2,5 mm, vorzugsweise 2,0 mm aufweisen und/oder sich in einem Bereich von 55° bis 65° Grad, vorzugsweise 60° Grad, erstrecken, relativ zu der ersten sich in Umfangsrichtung erstreckenden Rille (42).

3. Lauffläche nach Anspruch 1 oder 2, wobei sich die ersten abgewinkelten Lamellen (241) von der ersten sich in Umfangsrichtung erstreckenden Rille (42) in die erste Zwischenrippe (24) erstrecken und in der ersten Zwischenrippe (24) an einer Position enden, die sich axial in einem Bereich von 25 bis 75 Prozent, vorzugsweise 25 bis 50 Prozent, der axialen Breite der ersten Zwischenrippe (24) befindet.

4. Lauffläche nach wenigstens einem der vorhergehenden Ansprüche, die ferner eine zweite Zwischenrippe (25) beinhaltet, die sich in Umfangsrichtung um den Perimeter der Lauffläche (20) herum erstreckt, wobei die zweite Zwischenrippe (25) durch die zweite sich in Umfangsrichtung erstreckende Rille (44) und eine dritte sich in Umfangsrichtung erstreckende Rille (46) definiert ist, die an jeder axialen Seite der zweiten Zwischenrippe (25) angeordnet sind, wobei die zweite Zwischenrippe (25) mehrere zweite abgewinkelte Lamellen (251) aufweist, die sich sowohl axial als auch in Umfangsrichtung in einem Winkel in einem Bereich von 50° bis 70° Grad relativ zu der zweiten sich in Umfangsrichtung erstreckenden Rille (44) erstrecken, wobei die zweiten abgewinkelten Lamellen (251) jeweils eine radiale Tiefe in einem Bereich von 1,0 mm bis 3,0 mm aufweisen.

5. Lauffläche nach Anspruch 4, wobei die zweiten abgewinkelten Lamellen (251) eine gleichmäßige radiale Tiefe in einem Bereich von 1,5 mm bis 2,5 mm, vorzugsweise 2,0 mm, aufweisen und/oder sich in einem Bereich von 55° bis 65° Grad, vorzugsweise 60° Grad erstrecken, relativ zu der zweiten sich in Umfangsrichtung erstreckenden Rille (44).

6. Lauffläche nach Anspruch 4 oder 5, wobei sich die zweiten abgewinkelten Lamellen (251) von der zweiten sich in Umfangsrichtung erstreckenden Rille (44) in die zweite Zwischenrippe (24) und vollständig über die zweite Zwischenrippe (24) hinweg erstrecken und sich mit der dritten sich in Umfangsrichtung erstreckenden Rille (46) verbinden.

7. Lauffläche nach wenigstens einem der vorhergehenden Ansprüche 4 bis 6, die ferner eine dritte Zwischenrippe (26) beinhaltet, die sich in Umfangsrichtung um den Perimeter der Lauffläche (20) herum erstreckt, wobei die dritte Zwischenrippe (26) durch die dritte sich in Umfangsrichtung erstreckende Rille (46) und eine vierte sich in Umfangsrichtung erstreckende Rille (48) definiert ist, die an jeder axialen Seite der dritten Zwischenrippe (26) angeordnet ist, wobei die dritte Zwischenrippe (26) mehrere dritte abgewinkelte Lamellen (261) aufweist, die sich sowohl axial als auch in Umfangsrichtung in einem Winkel in einem Bereich von 50° bis 70° Grad relativ zu der dritten sich in Umfangsrichtung erstreckenden Rille (46) erstrecken, wobei die dritten abgewinkelten Lamellen (261) jeweils eine radiale Tiefe in einem Bereich von 1,0 mm bis 3,0 mm aufweisen.

8. Lauffläche nach Anspruch 7, wobei die dritten abgewinkelten Lamellen (261) eine gleichmäßige radiale Tiefe in einem Bereich von 1,5 mm bis 2,5 mm, vorzugsweise 2,0 mm, aufweisen und/oder sich in einem Bereich von 55° bis 65° Grad, vorzugsweise 60° Grad, erstrecken, relativ zu der dritten sich in Umfangsrichtung erstreckenden Rille (46).

9. Lauffläche nach Anspruch 7 oder 8, wobei sich die dritten abgewinkelten Lamellen (261) von der dritten sich in Umfangsrichtung erstreckenden Rille (46) in die dritte Zwischenrippe (26) und vollständig über die dritte Zwischenrippe (26) hinweg erstrecken und sich mit der vierten sich in Umfangsrichtung erstreckenden Rille (48) verbinden.

10. Lauffläche nach wenigstens einem der Ansprüche 7 bis 9, wobei die Umfangsbreite der dritten abgewinkelten Lamellen (261) variiert, vorzugsweise zunimmt, wenn sie sich entlang der dritten abgewinkelten Lamellen (261) von der dritten sich in Umfangsrichtung erstreckenden Rille (46) zu der vierten sich in Umfangsrichtung erstreckenden Rille (48) bewegen.

11. Lauffläche nach wenigstens einem der vorhergehenden Ansprüche 4 bis 10, wobei die zweite Zwischenrippe (25) eine Mittelrippe ist und wobei die axiale Breite der ersten und/oder der dritten Zwischenrippe (24, 26) in einem Bereich von 90 bis 110 Prozent der axialen Breite der zweiten Zwischenrippe (25) liegt.

12. Lauffläche nach wenigstens einem der vorhergehenden Ansprüche, wobei:
(i) die erste Schulterrippe (22) ein sich in Umfangsrichtung wiederholendes Muster von Lamellen umfasst, wobei das Muster eine erste Schulterlamelle (221), eine zweite Schulterlamelle (222), eine dritte Schulterlamelle (223), eine vierte Schulterlamelle (224) und eine fünfte Schulterlamelle (225) umfasst, wobei sich die erste Schulterlamelle (221) von der ersten sich in Umfangsrichtung erstreckenden Rille (42) in Richtung der ersten axialen Laufflächenkante (21) axial nach außen erstreckt und sich optional gleichzeitig ebenso in einer Umfangsrichtung angrenzend an die axial äußeren Enden der zweiten und der dritten Schulterlamellen (222, 223) und parallel zu der ersten Laufflächenkante (21) krümmt, wobei sich die zweiten, dritten und vierten Schulterlamellen (222, 223, 224) von der ersten sich in Umfangsrichtung erstreckenden Rille (42) axial nach außen in Richtung der ersten Laufflächenkante (21) erstrecken, und wobei die fünfte Schulterlamelle (225) vorzugsweise die Form eines Häkchens aufweist; und/oder
(ii) die zweite Schulterrippe (28) mehrere sich axial erstreckende Schulterlamellen (281) umfasst, die sich von der vierten sich in Umfangsrichtung erstreckenden Rille (48) in Richtung der zweiten axialen Laufflächenkante (23) axial nach außen erstrecken.

13. Lauffläche nach Anspruch 12, wobei die sich axial erstreckenden Schulterlamellen (281) in der zweiten Schulterrippe (28) und/oder wenigstens eine oder alle der ersten Schulterlamelle (221), der zweiten Schulterlamelle (222), der dritten Schulterlamelle (223) und der vierten Schulterlamelle (224) in der ersten Schulterrippe (22) in der Umfangsbreite entweder kontinuierlich oder in einem oder mehreren Schritten zunehmen, während sie sich axial nach außen erstrecken.

14. Lauffläche nach Anspruch 1, wobei die fünften Schulterlamellen (225) "Häkchen"-förmige Lamellen sind und sich angrenzend an die axial äußeren Kanten der vierten Schulterlamellen (224) befinden.

15. Reifen, der eine Lauffläche (20) nach wenigstens einem der vorhergehenden Ansprüche aufweist.

## Revendications

1. Bande de roulement destinée à un bandage pneumatique (2), la bande de roulement (20) possédant un plan circonférentiel médian (M), un premier bord axial de bande de roulement (21) et un deuxième bord axial de bande de roulement (23), la bande de roulement (20) comprenant en outre :
une première nervure d'épaulement (22) qui s'étend dans la direction circonférentielle autour d'un périmètre de la bande de roulement (20) ;
une deuxième nervure d'épaulement (28) qui s'étend dans la direction circonférentielle autour du périmètre de la bande de roulement (20) ; et
une première nervure intermédiaire (24) qui s'étend dans la direction circonférentielle autour du périmètre de la bande de roulement (20), la première nervure intermédiaire (24) étant définie par une première et une deuxième rainure (42, 44) qui s'étendent dans la direction circonférentielle en étant disposées sur chaque côté axial de la première nervure intermédiaire (24), la première nervure intermédiaire (24) possédant un certain nombre de premières lamelles angulaires (241) qui s'étendent à la fois dans la direction axiale et dans la direction circonférentielle en formant un angle qui se situe dans une plage de 50 degrés à 70 degrés par rapport à la première rainure (42) qui s'étend dans la direction circonférentielle, les premières lamelles angulaires (241) possédant chacune une profondeur radiale qui se situe dans une plage allant de 1,0 mm à 3,0 mm ;
**caractérisée en ce que** la première nervure d'épaulement (22) possède des premières lamelles d'épaulement (221), des deuxièmes lamelles d'épaulement (222), des troisièmes lamelles d'épaulement (223), des quatrièmes lamelles d'épaulement (224) et des cinquièmes lamelles d'épaulement (225), les premières lamelles d'épaulement (221) s'étendant dans la direction axiale à l'extérieur de la rainure (42) la plus externe dans la direction axiale en direction du premier bord (21) de la bande de roulement et les premières lamelles d'épaulement (221) formant également une courbe de manière simultanée dans une direction circonférentielle dans une position qui est adjacente par rapport aux extrémités externes, dans la direction axiale, des deuxièmes et des troisièmes lamelles d'épaulement (222, 223) et qui est parallèle au premier bord (21) de la bande de roulement.

2. Bande de roulement telle qu'elle est indiquée dans la revendication 1, dans laquelle les premières lamelles angulaires (241) possèdent une profondeur radiale uniforme qui se situe dans une plage allant de 1,5 mm à 2,5 mm, de préférence qui s'élève à 2,0 mm, et/ou s'étendent dans une plage allant de 55 degrés à 65 degrés, de préférence en formant un angle de 60 degrés, par rapport à la première rainure (42) qui s'étend dans la direction circonférentielle.

3. Bande de roulement telle qu'elle est indiquée dans la revendication 1 ou 2, dans laquelle les premières lamelles angulaires (241) s'étendent à partir de la première rainure (42) qui s'étend dans la direction circonférentielle jusque dans la première nervure intermédiaire (24) et se terminent dans la première nervure intermédiaire (24) à un endroit qui est situé dans la direction axiale et qui se situe dans une plage qui représente de 25 à 75 %, de préférence de 25 à 50 % de la largeur axiale de la première nervure intermédiaire (24).

4. Bande de roulement telle qu'elle est indiquée dans au moins une des revendications précédentes, qui englobe en outre une deuxième nervure intermédiaire (25) qui s'étend dans la direction circonférentielle autour du périmètre de la bande de roulement (20), la deuxième nervure intermédiaire (25) étant définie par la deuxième rainure (44) qui s'étend dans la direction circonférentielle et par une troisième rainure (46) qui s'étend dans la direction circonférentielle, qui sont disposées de chaque côté axial de la deuxième nervure intermédiaire (25), la deuxième nervure intermédiaire (25) possédant un certain nombre de deuxièmes lamelles angulaires (251) qui s'étendent à la fois dans la direction axiale et dans la direction circonférentielle en formant un angle qui se situe dans une plage allant de 50 degrés à 70 degrés par rapport à la deuxième rainure (44) qui s'étend dans la direction circonférentielle, les deuxièmes lamelles angulaires (251) possédant chacune une profondeur radiale qui se situe dans une plage allant de 1,0 mm à 3,0 mm.

5. Bande de roulement telle qu'elle est indiquée dans la revendication 4, dans laquelle les deuxièmes lamelles angulaires (251) possèdent une profondeur radiale uniforme qui se situe dans une plage allant de 1,5 mm à 2,5 mm, de préférence qui s'élève à 2,0 mm, et/ou s'étendent dans une plage allant de 55 degrés à 65 degrés, de préférence en formant un angle de 60 degrés, par rapport à la deuxième rainure (44) qui s'étend dans la direction circonférentielle.

6. Bande de roulement telle qu'elle est indiquée dans la revendication 4 ou 5, dans laquelle les deuxièmes lamelles angulaires (251) s'étendent à partir de la deuxième rainure (44) qui s'étend dans la direction circonférentielle jusque dans la deuxième nervure intermédiaire (24) et à travers la totalité de la deuxième nervure intermédiaire (24) et rejoignent la troisième rainure (46) qui s'étend dans la direction circonférentielle.

7. Bande de roulement telle qu'elle est indiquée dans au moins une des revendications précédentes 4 à 6, qui englobe en outre une troisième nervure intermédiaire (26) qui s'étend dans la direction circonférentielle autour du périmètre de la bande de roulement (20), la troisième nervure intermédiaire (26) étant définie par la troisième rainure (46) qui s'étend dans la direction circonférentielle et par une quatrième rainure (48) qui s'étend dans la direction circonférentielle, qui sont disposées de chaque côté axial de la troisième nervure intermédiaire (26), la troisième nervure intermédiaire (26) possédant un certain nombre de troisièmes lamelles angulaires (261) qui s'étendent à la fois dans la direction axiale et dans la direction circonférentielle en formant un angle qui se situe dans une plage allant de 50 degrés à 70 degrés par rapport à la troisième rainure (46) qui s'étend dans la direction circonférentielle, les troisièmes lamelles angulaires (261) possédant chacune une profondeur radiale qui se situe dans une plage allant de 1,0 mm à 3,0 mm.

8. Bande de roulement telle qu'elle est indiquée dans la revendication 7, dans laquelle les troisièmes lamelles angulaires (261) possèdent une profondeur radiale uniforme qui se situe dans une plage allant de 1,5 mm à 2,5 mm, de préférence qui s'élève à 2,0 mm, et/ou s'étendent dans une plage allant de 55 degrés à 65 degrés, de préférence en formant un angle de 60 degrés, par rapport à la troisième rainure (46) qui s'étend dans la direction circonférentielle.

9. Bande de roulement telle qu'elle est indiquée dans la revendication 7 ou 8, dans laquelle les troisièmes lamelles angulaires (261) s'étendent à partir de la troisième rainure (46) qui s'étend dans la direction circonférentielle jusque dans la troisième nervure intermédiaire (26) et à travers la totalité de la troisième nervure intermédiaire (26) et rejoignent la quatrième rainure (48) qui s'étend dans la direction circonférentielle.

10. Bande de roulement telle qu'elle est indiquée dans au moins une des revendications 7 à 9, dans laquelle la largeur circonférentielle des troisièmes lamelles angulaires (261) varie, de préférence augmente, lorsqu'on se déplace le long des troisièmes lamelles angulaires (261) à partir de la troisième rainure (46) qui s'étend dans la direction circonférentielle jusqu'à la quatrième rainure (48) qui s'étend dans la direction circonférentielle.

11. Bande de roulement telle qu'elle est indiquée dans au moins une des revendications précédentes 4 à 10, dans laquelle la deuxième nervure intermédiaire (25) représente une nervure centrale ; et dans laquelle la largeur axiale de la première et/ou de la troisième nervure intermédiaire (24, 26) se situe dans une plage qui représente de 90 à 110 % de la largeur axiale de la deuxième nervure intermédiaire (25).

12. Bande de roulement telle qu'elle est indiquée dans au moins une des revendications précédentes, dans laquelle :
(i) la première nervure d'épaulement (22) comprend un motif de lamelles qui se répète dans la direction circonférentielle, le motif comprenant une première lamelle d'épaulement (221), une deuxième lamelle d'épaulement (222), une troisième lamelle d'épaulement (223), une quatrième lamelle d'épaulement (224) et une cinquième lamelle d'épaulement (225) ; dans laquelle la première lamelle d'épaulement (221) s'étend dans la direction axiale à l'extérieur de la première rainure (42) qui s'étend dans la direction circonférentielle en direction du premier bord axial de la bande de roulement (21) et, de manière facultative, forme également une courbe de manière simultanée dans une direction circonférentielle dans une position qui est adjacente par rapport aux extrémités externes, dans la direction axiale, des deuxièmes et des troisièmes lamelles d'épaulement (222, 223) et parallèlement au premier bord (21) de la bande de roulement; dans laquelle les deuxièmes, les troisièmes et les quatrièmes lamelles d'épaulement (222, 223, 224) s'étendent dans la direction axiale à l'extérieur de la première rainure (42) qui s'étend dans la direction circonférentielle en direction du premier bord (21) de la bande de roulement; et dans laquelle la cinquième lamelle d'épaulement (225) possède de préférence une configuration en forme de « coche » ; et/ou
(ii) la deuxième nervure d'épaulement (28) comprend un certain nombre de lamelles d'épaulement (281) qui s'étendent dans la direction axiale, s'étendant dans la direction axiale à l'extérieur de la quatrième rainure (48) qui s'étend dans la direction circonférentielle, en direction du deuxième bord axial (23) de la bande de roulement.

13. Bande de roulement telle qu'elle est indiquée dans la revendication 12, dans laquelle les lamelles d'épaulement (281) qui s'étendent dans la direction axiale, dans la deuxième nervure d'épaulement (28) et/ou au moins une lamelle choisie parmi la première lamelle d'épaulement (221), la deuxième lamelle d'épaulement (222), la troisième lamelle d'épaulement (223) et la quatrième lamelle d'épaulement (224) ou la totalité des lamelles en question, dans la première nervure d'épaulement (22), augmentent en ce qui concerne leur largeur circonférentielle, que ce soit de manière continue ou en un ou plusieurs paliers, au fur et à mesure qu'elles s'étendent vers l'extérieur dans la direction axiale.

14. Bande de roulement conformément à la revendication 1, dans laquelle les cinquièmes lamelles d'épaulement (225) représentent des lamelles qui possèdent une configuration en forme de «coche» et sont disposées dans une position adjacente par rapport aux bords externes, dans la direction axiale, des quatrièmes lamelles d'épaulement (224).

15. Bandage pneumatique qui possède une bande de roulement (20) en conformité avec au moins une des revendications précédentes.
